# EUROPEAN PATENT SPECIFICATION

(11) **EP 2 579 733 B1**
(45) Date of publication and mention of the grant of the patent: **25.06.2014**
(21) Application number: 11727609.7
(22) Date of filing: 14.06.2011
(51) Int. Cl.: A23P 1/12, A23P 1/06, A23L 1/025

(54) **ULTRASONICALLY-ASSISTED EXTRUSION METHODS FOR MANUFACTURING POWDERED NUTRITIONAL PRODUCTS**
ULTRASCHALLUNTERSTÜTZTE EXTRUSIONSVERFAHREN ZUR HERSTELLUNG PULVERFÖRMIGER NÄHRSTOFFPRODUKTE
PROCÉDÉS D'EXTRUSION ASSISTÉS PAR ULTRASONS POUR LA FABRICATION DE PRODUITS NUTRITIFS EN POUDRE

(30) Priority: 14.06.2010 US 354394 P
(43) Date of publication of application: 17.04.2013
(73) Proprietor: Abbott Laboratories, Abbott Park, IL 60064 (US)
(72) Inventor: Mazer, Terrence, B, New Albany, Ohio 43054 (US); GORDON, Gary, M, Plain City, Ohio 43064 (US); TABASH, Rima, Vernon Hills, Illinois 60061 (US)
(74) Representative: Modiano, Micaela Nadia
(86) International application number: PCT/US2011/040272
(87) International publication number: WO 2011/159653

(56) References cited:
- WO-A2-2004/002423
- WO-A2-2006/124598
- US-A- 4 539 210
- US-A- 6 010 592
- US-A1- 2006 171 993
- US-A1- 2007 172 559

## Description

### FIELD OF THE DISCLOSURE

The present disclosure relates to ultrasonically-assisted extrusion methods for manufacturing powdered nutritional products. More particularly, the present disclosure relates to methods of manufacturing powdered nutritional products, including both powdered infant formulas and powdered adult nutritional products using ultrasonically-assisted extrusion methods.

### BACKGROUND OF THE DISCLOSURE

Powdered nutritional products, including both powdered infant formulas and powdered adult nutritional products are widely commercially available have their use has grown steadily over the years. These products typically contain fat, carbohydrate, protein, vitamins, and minerals, and potentially other nutritionally beneficial components. Prior to use, the powdered formula or product is reconstituted in water at a predetermined ratio to produce a ready-to-drink liquid.

Powdered nutritional products, including both powdered infant formulas and powdered adult nutritional products generally contain from about 0.5% to about 35% (by weight) fat. In order for the finished product to be package stable (i.e., not subject to significant oxidation and rancidity) and not have significant fat separation when reconstituted, during manufacturing the fat component is generally sheared to globules having a size of between about 0.1-20 microns while simultaneously emulsifying the sheared fat globules with hydrated protein and other additional emulsifiers.

This shearing and emulsifying has traditionally been accomplished by preparing a high solids water slurry (i.e., 30% to 60% total solids) and pumping the slurry through a high pressure homogenizer with a homogenization pressure between 2000 and 4500 psig. The slurry is then typically evaporated to about 45% to 60% total solids and spray dried. This generally produces stable fat that is not subject to substantial oxidation during storage and is easily reconstituted.

Although extrusion methods are known as highly efficient methods that significantly minimize the amount of water and energy needed and that are capable of producing pellets that can be dried and ground into powdered material, extrusion processes have generally not been used to date to produce powdered infant formulas and powdered adult nutritional products because of the inability of the extrusion process to produce a finished powder with a stable fat emulsion. Extrusion processes have generally not been able to adequately hydrate the protein with the limited amount of water available during extrusion to allow for the fat globules to be sufficiently emulsified by the hydrated protein. Without proper emulsification of the fat globules prior to extrusion, the fat is subject to oxidation and rancidity during storage, and fat separation during reconstitution. US 2006171993 discloses processes for manufacturing infant formulas optionally with extrusion and ultrasonification.

As such, there is a need in the art for efficient extrusion methods for producing powdered nutritional products. It would be advantageous if the powdered nutritional products included fat that was sufficiently emulsified to resist oxidation and rancidity during storage and resist fat separation upon reconstitution.

### SUMMARY OF THE DISCLOSURE

The present disclosure is directed to a process for manufacturing an extruded powdered infant formula having a free fat level of less than 5% by weight. The process comprises introducing a dry mixture comprising protein and carbohydrate into a preconditioner, introducing a liquid comprising water and fat into the preconditioner, contacting the dry mixture and liquid to produce a slurry, feeding the slurry into an ultrasonically-assisted extruder to emulsify the fat with hydrated protein, extruding the slurry to produce pellets, and drying and grinding the pellets to produce a powdered infant formula. The powdered infant formula comprises from about 10% to about 35% fat, from about 5% to about 35% protein, from about 30% to about 85% carbohydrates, and from about 2% to about 3% water, all by weight of the powdered infant formula.

The present disclosure is further directed to a process for producing a powdered adult nutritional product having a free fat level of less than 5% by weight of the powdered adult nutritional product. The process comprises introducing a dry mixture comprising protein and carbohydrate into a preconditioner, introducing a liquid comprising water and fat into the preconditioner, contacting the dry mixture and liquid to produce a slurry, feeding the slurry into an ultrasonically-assisted extruder to emulsify the fat with hydrated protein, extruding the slurry to produce pellets, and drying and grinding the pellets to produce a powdered adult nutritional product. The powdered adult nutritional product comprises from about 0.5% to about 25% fat, from about 10% to about 90% protein, from about 5% to about 60% carbohydrates, and from about 2% to about 5% water, all by weight of the powdered adult nutritional product.

It has been unexpectedly found that powdered infant formulas and powdered adult nutritional products having sufficiently emulsified fat for excellent reconstitution and oxidative stability during storage can be prepared utilizing an extrusion process incorporating ultrasonic energy in the extruder. The ultrasonically-assisted extruder provides the correct energy within the extrusion apparatus to sufficiently emulsify the fat component with the adequately hydrated protein using a low moisture level that still allows for adequate back pressure within the extruder for mixing and providing the adequate internal heat generation to achieve the desired pasteurization of the extrudate.

The powdered nutritional products, including both powdered infant formulas and powdered adult nutritional products, produced utilizing the ultrasonically-assisted extruder have excellent shelf life (i.e., stability) and resist oxidation of the fat that leads to rancidity. Additionally, the powders are easily reconstituted in water with unwanted fat separation. Additionally, the ultrasonically-assisted extruder is easily controlled such that the protein component is not significantly denatured such that the resulting powder has a grain level that does not exceed 4, on a scale of 1 to 6.

### BRIEF DESCRIPTION OF THE DRAWINGS

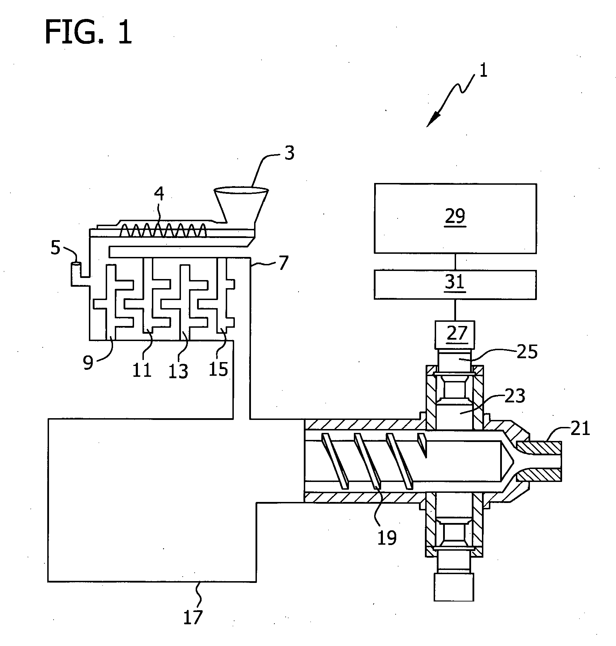

Figure 1 is a schematic diagram of an ultrasonically-assisted extrusion apparatus suitable for use in the processes of the present disclosure.

### DETAILED DESCRIPTION OF THE DISCLOSURE

The powdered infant formulas and powdered adult nutritional products and corresponding manufacturing methods of the present disclosure are directed to powders that have been prepared utilizing an extrusion process incorporating ultrasonic energy to sufficiently hydrate the protein component and emulsify the fat component. These and other essential or optional elements or limitations of the powders and methods of the present disclosure are described in detail hereinafter.

The term "powdered nutritional products" as used herein includes both powdered infant formulas, powdered adult nutritional products, and powdered nutritional products generally.

The term "powdered infant formula" as used herein includes both powdered infant formulas and powdered toddler formulas, wherein infant formulas are intended for infants up to about I year of age and toddler formulas are intended for children from about 1 year of age to about 10 years of age.

The term "powdered adult nutritional product" as used herein includes formulas for generally maintaining or improving the health of an adult, and includes those formulas designed for adults who need to control their blood glucose.

The term "free fat level" as used herein refers to the amount of fat by weight of the powdered infant formula or powdered adult nutritional product that is not in emulsified form.

The term "shelf life" as used herein refers to a product's commercially viable life-span, after which the product is unfit or undesirable for sale and/or consumption.

All percentages, parts and ratios as used herein, are by weight of the total formulation, unless otherwise specified. All such weights as they pertain to listed ingredients are based on the active level and, therefore, do not include solvents or byproducts that may be included in commercially available materials, unless otherwise specified.

Numerical ranges as used herein are intended to include every number and subset of numbers within that range, whether specifically disclosed or not. Further, these numerical ranges should be construed as providing support for a claim directed to any number or subset of numbers in that range. For example, a disclosure of from 1 to 10 should be construed as supporting a range of from 2 to 8, from 3 to 7, from 5 to 6, from 1 to 9, from 3.6 to 4.6, from 3.5 to 9.9, and so forth.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

The various embodiments of the powders of the present disclosure may also be substantially free of any optional or selected essential ingredient or feature described herein, provided that the remaining powder still contains all of the required ingredients or features as described herein. In this context, and unless otherwise specified, the term "substantially free" means that the selected powder contains less than a functional amount of the optional ingredient, typically less than 0.1% by weight, and also including zero percent by weight of such optional or selected essential ingredient.

The powdered nutritional products and corresponding manufacturing methods of the present disclosure can comprise, consist of, or consist essentially of the essential elements and limitations of the disclosure as described herein, as well as any additional or optional ingredients, components, or limitations described herein or otherwise useful in powdered nutritional applications.

### Product Form

The products produced utilizing the ultrasonically-assisted extrusion processes of the present disclosure are powdered nutritional products. These products are generally mixed with water or another liquid and reconstituted prior to use.

The products of the present disclosure generally have a moisture content of from about 2% to about 5% (by weight), or even from about 2% to about 4% (by weight), or even from about 2% to about 3% (by weight), or even from about 2.5% to about 3% (by weight).

The powdered products of the present disclosure have a free fat level of less than about 5%, including from about 1% to about 5%, or even from about 1% to about 3%, or even from about 1% to about 2%, by weight of the powdered nutritional product. By limiting the free fat level of the powdered product, the shelf life is extended as the product is less susceptible to rancidity. Additionally, by limiting the free fat level of the powdered product, the product can be easily reconstituted without significant fat separation.

The products of the present disclosure generally have a shelf life of at least about 3 months, or even at least about 4 months, or even at least about 5 months or even 12 months, or even 18 months, including from 6 to 18 months.

The products of the present disclosure may be formulated with sufficient kinds and amounts of nutrients so as to provide a sole, primary, or supplemental source of nutrition, or to provide a specialized nutritional formulation for use in individuals afflicted with specific diseases or conditions.

### Macronutrients

The powdered products of the present disclosure comprise at least fat, protein, and carbohydrate. Generally, any source of fat, protein, and carbohydrate that is known or otherwise suitable for use in powdered nutritional products may also be suitable for use herein, provided that such macronutrients arc also compatible with the essential elements of the nutritional formulations as defined herein.

Although total concentrations or amounts of the fat, protein, and carbohydrates may vary depending upon the nutritional needs of the intended user, such concentrations or amounts most typically fall within one of the following embodied ranges, inclusive of any other essential fat, protein, and or carbohydrate ingredients as described herein.

### Carbohydrate

The powdered nutritional products of the present disclosure may comprise a carbohydrate source.

When the ultrasonically-assisted extrusion product is a powdered infant formula, the carbohydrate component is present in an amount of from about 30% to about 85%, including from about 45% to about 60%, including from about 50% to about 55% by weight of the powdered infant formula. The carbohydrate source may be any known or otherwise suitable source that is safe and effective for oral administration and is compatible with the essential and other ingredients in the selected product form.

When the ultrasonically-assisted extrusion product is a powdered adult nutritional product, the carbohydrate component is present in an amount of from about 5% to about 60%, including from about 7% to about 30%, including from about 10% to about 25%, by weight of the powdered adult nutritional product. The carbohydrate source may be any known or otherwise suitable source that is safe and effective for oral administration and is compatible with the essential and other ingredients in the selected product form.

Suitable carbohydrates or carbohydrate sources for use in the powdered nutritional products include glycerin, sucrose, dextrins, maltodextrin, tapioca maltodexrin, corn syrup, tapioca syrup, isomaltulose, lactose, fructose, both unhydroyzed, partially hydrolyzed gums, gum Arabic, also known as gum acacia, xanthan gum, gum tragacanth, and guar gum, glycerin, vegetable fibers, glucose, maltose, cooked and uncooked waxy and non-waxy corn starch, cooked and uncooked waxy and non-waxy tapioca starch. cooked and uncooked waxy and non-waxy rice starch, tagatose, galacto-oligosaccharides (GOS), fructo-oligosaccharides (FOS) including short chain, moderate length chain, and long chain fructo-oligosaccharides, alpha-lactose, beta-lactose, polydextrose, and combinations thereof.

Other suitable carbohydrates include any dietary fiber or fiber source, non-limiting examples of which include insoluble dietary fiber sources such as oat hull fiber, pea hull fiber, soy hull fiber, soy cotyledon fiber, sugar beet fiber, cellulose, corn bran, and combinations thereof.

The carbohydrate for use in the nutritional formulation may therefore include soluble and/or insoluble fiber, or other complex carbohydrate, preferably having a DE (dextrose equivalent) value of less than about 40, including less than 20, and also including from 1 to 10.

### Fat

The powdered nutritional products of the present disclosure may comprise a fat or fat source.

When the ultrasonically-assisted extrusion product is a powdered infant formula, the fat component is present in an amount of from about 10% to about 35%, including from about 25% to about 30%, and including from about 26% to about 28% by weight of the powdered infant formula. The fat may be any known or otherwise suitable source that is safe and effective for oral administration and is compatible with the essential and other ingredients in the selected product form.

When the ultrasonically-assisted extrusion product is a powdered adult nutritional product, the fat component is present in an amount of from about 0.5% to about 20%, including from about 1% to about 10%, and also including from about 2% to about 5% by weight of the powdered adult nutritional product. The fat may be any known or otherwise suitable source that is safe and effective for oral administration and is compatible with the essential and other ingredients in the selected product form.

Suitable fat or fat sources include coconut oil, soy oil, high oleic safflower or sunflower oil, safflower oil, sunflower oil, corn oil, palm oil, palm kernel oil, canola oil, triheptanoin, milk fat including butter, any animal fat or fraction thereof, fish or crustacean oils containing docosahexaenoic acid (DHA) and/or eicosapentaenoic acid (EPA), phospholipids from fish or crustacean containing docosahexaenoic acid (DHA) and/or eicosapentaenoic acid (EPA), concentrates of DHA and/or EPA from marine, vegetable, or fugal sources, arachidonic acid (ARA) concentrate from fungal or other sources, α-linolenic acid concentrate (ALA), flax seed oil, phospholipids and fractions thereof, including soy lecithin and egg lecithin, both partially hydrolyzed and unhydrolyzed, monoglycerides and/or diglycerides from both vegetable and animal sources, and plant sterols and compounds containing plant sterols, diacetyl tartaric acid of mono and diglycerides (DATEM) and combinations thereof.

### Protein

The powdered nutritional products of the present disclosure may comprise a protein or protein source.

When the ultrasonically-assisted extrusion product is a powdered infant formula, the protein component is present in an amount of from about 5% to about 35%, including from about 8% to about 12%, and including from about 10% to about 12% by weight of the powdered infant formula. The protein may be any known or otherwise suitable source that is safe and effective for oral administration and is compatible with the essential and other ingredients in the selected product form.

When the ultrasonically-assisted extrusion product is a powdered adult nutritional product, the protein component is present in an amount of from about 10% to about 90%, including from about 30% to about 80%, and also including from about 40% to about 75% by weight of the powdered adult nutritional product. The protein may be any known or otherwise suitable source that is safe and effective for oral administration and is compatible with the essential and other ingredients in the selected product form.

Suitable protein or protein sources include either intact, partially hydrolyzed, or fully hydrolyzed, or a combination thereof, of lactase treated nonfat dry milk, milk protein isolate, milk protein concentrate, whey protein concentrate, glycomacropeptides, whey protein isolate, milk caseinates such as sodium caseinate, calcium caseinate, or any combination of caseinate salts of any mineral, soy protein concentrate, soy protein isolate, soy protein flour, pea protein isolate, pea protein concentrate, any monocot or dicot protein isolate or protein concentrate, animal collagen, gelatin, all amino acids, taurine, milk protein peptides, whey protein peptides, bovine colostrum, human colostrum, other mammalian colostrum, genetic communication proteins found in colostrum and in mammalian milk such as, but not limited to, interleukin proteins, hydrolyzed animal collagen, hydrolyzed yeast, and combinations thereof.

### Macronutrient Profile

The total amount or concentration of fat, carbohydrate, and protein, in the powdered infant formulas or powdered adult nutritional products of the present disclosure can vary considerably depending upon the selected formulation and dietary or medical needs of the intended user. Additional suitable examples of macronutrient concentrations are set forth below. In this context, the total amount or concentration refers to all fat, carbohydrate, and protein sources in the powdered product. For powdered infant formulas, such total amounts or concentrations are most typically and preferably formulated within any of the embodied ranges described in the following table (all numbers have "about" in front of them).

| Nutrient (% Calories) | Embodiment A | Embodiment B | Embodiment C |
|---|---|---|---|
| Carbohydrate | 20-85 | 30-60 | 35-55 |
| Fat | 5-70 | 20-60 | 25-50 |
| Protein | 2-75 | 5-50 | 7-40 |

For powdered adult nutritional products, such total amounts or concentrations are most typically and preferably formulated within any of the embodied ranges described in the following table (all numbers have "about" in front of them).

| Nutrient (% Calories) | Embodiment A | Embodiment B | Embodiment C |
|---|---|---|---|
| Carbohydrate | 1-98 | 10-75 | 30-50 |
| Fat | 1-98 | 20-85 | 35-55 |
| Protein | 1-98 | 5-70 | 15-35 |

### Optional Ingredients

The powdered nutritional products of the present disclosure may further comprise other optional components that may modify the physical, chemical, aesthetic or processing characteristics of the products or serve as pharmaceutical or additional nutritional components when used in the targeted population. Many such optional ingredients are known or otherwise suitable for use in medical food or other nutritional products or pharmaceutical dosage forms and may also be used in the formulations herein, provided that such optional ingredients are safe and effective for oral administration and are compatible with the essential and other ingredients in the selected product form.

Non-limiting examples of such optional ingredients include preservatives, anti-oxidants, emulsifying agents, buffers, pharmaceutical actives, additional nutrients as described herein, vitamins, minerals, sweeteners including artificial sweeteners (e.g., saccharine, aspartame, acesulfame K, Stevia extract, and sucralose) colorants, flavorants in addition to those described herein, thickening agents and stabilizers, emulsifying agents, lubricants, probiotics (such as acidophilous and/or bifidus bacteria, both alive and inactive), prebiotics, beta-hydroxy beta-methylbutyrate (HMB), arginine, glutamine, and so forth.

Non-limiting examples of suitable minerals for use herein include phosphorus, sodium, chloride, magnesium, manganese, iron, copper, zinc, iodine, calcium, potassium, chromium, molybdenum, selenium, and combinations thereof.

Non-limiting examples of suitable vitamins for use herein include carotenoids (e.g., beta-carotene, zeaxanthin, lutein, lycopene), biotin, choline, inositol, folic acid, pantothenic acid, choline, vitamin A, thiamine (vitamin B₁), riboflavin (vitamin B₂), niacin (vitamin B₃), pyridoxine (vitamin B₆), cyanocobalamine (vitamin B₁₂), ascorbic acid (vitamin C), vitamin D, vitamin E, vitamin K, and various salts, esters or other derivatives thereof, and combinations thereof.

### Manufacture

The powdered nutritional products of the present disclosure may be prepared by any known or otherwise effective extrusion process so long as the extruder utilized to form the extrudate is subjected to ultrasonic energy during the manufacturing process as described herein.

The methods of the present disclosure incorporating the ultrasonic energy in the extruder provide for improved emulsification of the fat component and improved hydration of the protein component in the raw materials introduced into the extruder. By increasing the hydration of the protein component, the protein is able to sufficiently emulsify the fat component such that the resulting product is significantly less susceptible to oxidation and can provide for excellent reconstitution without fat separation.

Any suitable extruder including ultrasonic energy as described herein may be suitable for use in the present disclosure including, for example, single screw, multi screw, ring screw, planetary gear extruders and the like. Generaly, the extrusion will be carried out at a temperature of at least about 70°C, and including from about 70°C to about 120°C.

Referring now to Figure 1, there is shown an extrusion apparatus 1 suitable for use in the processes of the present disclosure. The extrusion apparatus 1 includes feeder 3 (which may optionally include one or more stirrers within, not shown) for dry ingredients, feeding screw 4, and liquid additive opening 5 for liquid ingredients. Feeder 3 and liquid additive opening 5 both feed into preconditioner 7, which includes mixing arms 9, 11, 13, and 15. Preconditioner 7 provides a mixture of dry and liquid ingredients for extrusion into extruder 17 including screw 19 (multiple screws may also be used, not shown) and through shaping die 21. Connected to the extruder 17 is horn 23, which provides the ultrasonic energy to the extruder 17. Horn 23 is connected to booster 25, which is connected to converter 27 for originating the ultrasonic energy. Ultrasonic power supply 29 and wattmeter 31 are also shown.

In one embodiment of the present disclosure, a powdered nutritional product is prepared by first blending together the "dry" ingredients and introducing the dry ingredient blend into feeder 3. The "dry" ingredients may include, for example, the protein, the carbohydrates, the minerals, the vitamins, processing aids, optional dry components, etc. The dry blended feed may be prepared with a batch dry blender such that the dry ingredient blend is introduced into the feeder 3 batchwise, or the dry ingredient blend may be continuously made with a continuous mixer and continuously fed into the feeder 3. Into the liquid additive opening 5 is introduced the fat and water mixture (water is typically present in an amount of from about 10% to about 25%, or from about 10% to about 20%, or from about 10% to about 15% by weight of all of the raw materials), which may optionally include other liquid ingredients desired to be incorporated into the ultimate extruded powdered material. The dry ingredient blend from the feeder 3 and the fat/water liquid blend from the liquid additive opening 5 are brought together, contacted and mixed in the preconditioner 7, which feeds the mixed dry ingredient blend and liquid blend (generally referred to as a slurry) into the extruder 9, which is ultrasonically-assisted by horn 23 through booster 25 and converter 27.

The formed pellets (not shown) are extruded through the shaping die 21. The pellets can be in pieces, chunks, layers, or any other form of extrudate. Subsequent to extrusion through die 21, the pellets may be dried and optionally ground to the desired size using conventional drying and grinding means.

As will be recognized by one skilled in the art based on the disclosure herein, the feeder 3 with feeding screw 4 and the liquid additive opening 5 are set to provide a continuous flow of raw materials (i.e., dry ingredient blend and liquid water/fat blend) into the preconditioner 7 at the desired amounts to produce the desired powdered product. Although generally discussed herein as having a feeder 3 and a liquid additive opening 5, it is within the scope of the present invention to have a feeder 3 for the "dry" ingredients and have the water/fat mixture added to the preconditioner 7 at one or multiple ports (not shown) over the length of the preconditioner 7. or at the beginning of the extruder 17. Regardless of how the water/fat mixture is introduced into the preconditioner 7 or extruder 17, it is desirable to establish a constant flow rate of all of the raw materials (i.e. the slurry) into the extruder to produce a substantially homogeneous extruded pellet. In some preferred embodiments, the flow rate of the water/fat mixture and/or the dry ingredients is controlled with flow meters (not shown).

In some embodiments of the present disclosure, the extrusion apparatus including ultrasonic energy may include two or more preconditioners and/or two or more ultrasonic extruders, depending upon the exact setup of the apparatus. In some embodiments, the product may be a multiply extruded product: that is, the ultimate product produced by the extrusion apparatus may have been extruded with ultrasonic energy two, three, four or more times, with additional components being added prior to each successive extrusion.

In one specific example of multiple extrusions, the total carbohydrate component may be added in various amounts to multiple slurries prior to extrusion; that is, a portion of the carbohydrate component may be added to a slurry that is extruded and then additional carbohydrate component may be added to the extruded material and subsequently extruded a second time to produce the final extrudate. In some embodiments, the carbohydrate component as described herein is utilized to control the viscosity of the slurry being extruded such that it is not too viscous to be moved through the extruded and yet not too thin or watery such that proper extrusion cannot occur. In a specific embodiment including two ultrasonic extrusion steps, the first slurry subjected to ultrasonic extrusion may include from about 0% to about 80%, including from about 5% to about 70%, including from about 10% to about 50% carbohydrate by weight total carbohydrate component and the slurry subjected to the second ultrasonic extrusion may include from about 20% to about 100%, including from about 30% to about 95%, including from about 50% to about 90% carbohydrate by weight total carbohydrate component.

In some embodiments of the present disclosure, one or more components of the powdered nutritional product that are heat sensitive (that is, subject to degradation, oxidation, and/or destruction at elevated temperatures) may be admixed into the extruded pellets post-extrusion using a continuous mixer, or equivalent mixing device. For example, heat sensitive components such as certain vitamins, probiotics and/or oils that in some embodiments could be degraded or destroyed at the elevated temperatures of the extruder, may be admixed into the pellets post-extrusion via continuous mixing or similar device.

The frequency of the ultrasonic energy used in the extrusion processes described herein may be less than about 30 kHz, or less than about 20 kHz, or even less than about 10 kHz and, in some embodiments, may be from about 16 kHz to about 24 kHz. The energy density is between about 0.0001 W/cubic centimeters to about 30 W/cubic centimeters. The amplitude of the ultrasonic energy may be from about 0.1 microns to about 150 microns. Suitable ultrasonic energy setups for extrusion are shown, for example, in WO 2010/012032 and U.S. 2007/0172559, both of which are incorporated by reference herein.

As will be recognized by one skilled in the art based on the disclosure herein, the volume (i.e., the flow rate) of the slurry being fed into the extruder for extrusion into pellets and the time of exposure of the slurry to the ultrasonic energy at a desired energy density may be considered in order to make the process suitable for scalability and reproducibility. As noted above, it is generally desirable to maintain a constant flow rate of the slurry into the extruder. Suitable flow rates of the slurry into the extruder may be, for example, from about 0.1 kg/min to about 10 kg/min, including from about 1 kg/min to about 7 kg/min, including from about 2 kg/min to about 5 kg/min. A constant flow rate and a consistent application of ultrasonic energy allow for the intensity of the processing of a given amount of slurry to remain consistent such that reproducible samples can be produced and scaled as desired.

In some embodiments of the present disclosure, the ultrasonic energy level introduced into the extruder is set at a level such that the protein present in the material to be extruded is not substantially denatured; that is, the ultrasonic energy level is set at a level such that the protein in the material to be extruded remains substantially non-denatured. Generally, the ultrasonic energy is set at a level such that when the finished powder is reconstituted, the grain level does not exceed 4 on a scale of from I to 6. The grain scale is a visual representation of undissolved powder either due to having poor solubility or containing denatured protein. A scale of 1 has little or no undissolved powder when a clean glass slide is dipped in the properly mixed power-water solution in a beaker. As the scale increases, more and more undissolved powder is observed when a clean slide is dipped in a beaker with the properly mixed powder-water solution. Grain values of 5 or 6 are considered unacceptable and contain significant amounts of undissolved powder when a clean slide is dipped into a beaker containing the properly mixed powder-water solution.

The powdered nutritional products of the present disclosure may, of course, be manufactured by other known or otherwise suitable extrusion techniques and ultrasonic setups not specifically described or shown herein without departing from the spirit and scope of the present disclosure so long as the extruder is subjected to ultrasonic energy as described herein. The present embodiments are, therefore, to be considered in all respects as illustrative and not restrictive and that all changes and equivalents also come within the description of the present disclosure. The following non-limiting examples will further illustrate the formulations and methods of the present invention.

### EXAMPLES

The following examples illustrate specific embodiments and/or features of the powdered nutritional products of the present disclosure. The examples are given solely for the purpose of illustration and are not to be construed as limitations of the present disclosure, as many variations thereof are possible without departing from the spirit and scope of the disclosure. All exemplified amounts are weight percentages based upon the total weight of the formulation, unless otherwise specified.

### Examples 1-5

Examples 1-5 illustrate powdered infant formulas that could be produced from an extrusion process including ultrasonic energy as described in the present disclosure. The starting ingredients of Examples 1-5 are listed in the following Table.

| **Ingredient (lbs per 1000 lbs)** | **Example 1** | **Example 2** | **Example 3** | **Example 4** | **Example 5** | **Example 6** |
|---|---|---|---|---|---|---|
| **Dry Blended Ingredients** | | | | | | |
| Non Fat Dry Milk | 148 | 0 | 0 | 0 | 111.6 | 100 |
| Whey Protein Isolate | 0 | 148 | 0 | 0 | 0 | 0 |
| Whey Protein Concentrate | 0 | 0 | 188 | 0 | 45 | 41.5 |
| Soy Protein Isolate | 0 | 0 | 0 | 190 | 0 | 0 |
| Lactose | 500 | 475 | 430.2 | 455 | 380 | 358 |
| Vitamin ADEK Premix | 0.4 | 0.4 | 0.4 | 0.4 | 0.4 | 0.3 |
| Mixed Carotenoids | 0.3 | 0.3 | 0.3 | 0.3 | 0.4 | 0.3 |
| Vitamin/Mineral Premix | 1.1 | 1.1 | 1.1 | 1.1 | 1.0 | 0.9 |
| Galactooligosaccharides | 60.2 | 60.2 | 60 | 60 | 58 | 55 |
| Fructoolieosaccharides | 30 | 30 | 30 | 30 | 0 | 0 |

| **Liquid Ingredients** | | | | | | |
|---|---|---|---|---|---|---|
| Water | 150 | 130 | 160 | 160.2 | 150 | 200 |
| High Oleic Safflower Oil | 80 | 0 | 0 | 0 | 70 | 93 |
| Soy Oil | 0 | 125 | 0 | 0 | 75 | 71 |
| Coconut Oil | 0 | 0 | 100 | 80 | 75 | 71 |
| ARA Oil | 10 | 10 | 10 | 8 | 2.6 | 2.4 |
| DHA Oil | 15 | 15 | 15 | 10 | 17 | 1.6 |
| Borage Oil | 5 | 5 | 5 | 5 | 5 | 5 |

The powdered infant formula may be prepared by first mixing together all of the dry ingredients to produce a dry ingredient mixture and then mixing together all of the liquid ingredients to produce a liquid ingredient mixture. The dry ingredient mixture is fed into the feeder of an ultrasonically-assisted extruder apparatus similar to that of Figure 1 and the liquid ingredient mixture is fed into the liquid additive opening and the dry ingredient mixture and liquid ingredient mixture are brought together in the preconditioner, where they are mixed together and metered into the extruder and extruded through the ultrasonically-assisted extruder and through the exit die. The frequency of the ultrasonic energy may be about 20 kHz, the energy density may be about 10 W/cubic centimeters, and the amplitude of the ultrasonic energy may be about 100 microns. The temperature of the extruder may be about 100°C and the slurry flow rate may be about 4.6 kg/min. The extruded pellets are dried and ground by conventional drying and grinding means to produce the powdered infant formula.

## Claims

1. A process for manufacturing an extruded powdered nutritional product, the process comprising:
providing a dry mixture comprising protein and carbohydrate and a liquid comprising water and fat;
contacting the dry mixture and liquid to produce a slurry;
feeding the slurry into an ultrasonically-assisted extruder to emulsify the fat with hydrated protein;
extruding the slurry to produce pellets; and
drying and grinding the pellets to produce a powdered nutritional product,
wherein the powdered nutritional product comprises a free fat level of less than 5% by weight of the powdered nutritional product.

2. The process of claim 1 further comprising introducing a dry mixture comprising protein and carbohydrate into a preconditioner and introducing a liquid comprising water and fat into the preconditioner.

3. The process of claims 1-2 wherein the ultrasonically-assisted extruder is subjected to ultrasonic energy having a frequency of less than 30 Kilohertz.

4. The process of claims 1-3 wherein one or more additional components are mixed into the extruded pellets prior to drying and grinding wherein the one or more components are selected from probiotics, prebiotics, vitamins, and combinations thereof.

5. The process of claims 1-4 wherein the powdered nutritional product has a grain level of 4 or less on a grain scale of 1 to 6.

6. The process of claims 1-5 wherein the free fat level in the powdered nutritional product is from 1% to 5% by weight of the powdered nutritional product.

7. The process of claims 1-6 wherein the free fat level in the powdered nutritional product is from 1% to 3% by weight of the powdered nutritional product.

8. The process of claims 1-7 wherein the powdered nutritional product comprises from 10% to 35% fat, from 5% to 35% protein, from 30% to 85% carbohydrates, and from 2% to 5% water, all by weight of the powdered nutritional product.

9. The process of claims 1-8 wherein the powdered nutritional product comprises from 25% to 30% fat, from 8% to 12% protein, from 45% to 60% carbohydrates, and from 2% to 5% water, all by weight of the powdered nutritional product.

10. The process of claims 1-9 wherein the powdered nutritional product comprises from 26% to 28% fat, from 10% to 12% protein, from 50% to 55% carbohydrates, and from 2% to 5% water, all by weight of the powdered nutritional product.

11. The process of claims 1-7 wherein the powdered nutritional product comprises from 0.5% to 20% fat, from 10% to 90% protein, from 5% to 40% carbohydrates, and from 2% to 5% water, all by weight of the powdered nutritional product.

12. The process of claims 1-7 and 11 wherein the powdered nutritional product comprises from 1% to 10% fat, from 30% to 80% protein, from 7% to 30% carbohydrates, and from 2% to 5% water, all by weight of the powdered nutritional product.

13. The process of claims 1-7 and 11-12 wherein the powdered nutritional product comprises from 2% to 5% fat, from 40% to 75% protein, from 10% to 25% carbohydrates, and from 2% to 5% water, all by weight of the powdered nutritional product.

14. The process of claims 1-13 wherein the dry mixture additionally includes minerals.

15. The process of claim 1-5 wherein the powdered nutritional product includes vitamins and minerals.

## Patentansprüche

1. Ein Verfahren zur Herstellung eines extrudierten pulverisierten Ernährungsprodukts, wobei das Verfahren folgendes umfasst:
Bereitstellen einer trockenen Mischung umfassend Protein und Kohlenhydrat und einer Flüssigkeit umfassend Wasser und Fett;
In-Kontakt-bringen der trockenen Mischung und der 'Flüssigkeit, um eine Aufschlämmung zu erzeugen;
Einspeisen der Aufschlämmung in einen Ultraschallassistierten Extruder, um das Fett mit hydriertem Protein zu emulgieren;
Extrudieren der Aufschlämmung, um Pellets zu erzeugen; und
Trocknen und Mahlen der Pellets, um ein pulverisiertes Ernährungsprodukt zu erzeugen, worin das pulverisierte Ernährungsprodukt einen freien Fett-Level von weniger als 5 Gewichtsprozent bezogen auf das pulverisierte Ernährungsprodukt umfasst.

2. Das Verfahren gemäß Anspruch 1, weiter umfassend das Einführen einer trockenen Mischung umfassend Protein und Kohlenhydrat in einen Preconditioner und Einführen einer Flüssigkeit umfassend Wasser und Fett in den Preconditioner.

3. Das Verfahren gemäß Ansprüchen 1-2, worin der Ultraschall-assistierte Extruder Ultraschallenergie mit einer Frequenz von weniger als 30 Kilohertz unterworfen wird.

4. Das Verfahren gemäß Ansprüchen 1-3, worin eine oder mehrere zusätzliche Komponenten in die extrudierten Pellets vor dem Trocknen und Mahlen gemischt werden, worin die eine oder die mehreren Komponenten gewählt sind aus Probiotika, Präbiotika, Vitaminen und Kombinationen daraus.

5. Das Verfahren gemäß Ansprüchen 1-4, worin das pulverisierte Ernährungsprodukt einen Korn-Level von 4 oder weniger auf einer Kornskala von 1 bis 6 hat.

6. Das Verfahren gemäß Ansprüchen 1-5, worin der freie Fett-Level in dem pulverisierten Ernährungsprodukt von 1 bis 5 Gewichtsprozent bezogen auf das pulverisierte Ernährungsprodukt ist.

7. Das Verfahren gemäß Anspruch 1-6, worin der freie Fettlevel in dem pulverisierten Ernährungsprodukt von 1 bis 3 Gewichtsprozent bezogen auf das pulverisierte Ernährungsprodukt ist.

8. Das Verfahren gemäß Ansprüchen 1-7, worin das pulverisierte Ernährungsprodukt von 10% bis 35% Fett, von 5% bis 35% Protein, von 30% bis 85% Kohlenhydrate, und von 2% bis 5% Wasser umfasst, alle bezogen auf das Gewicht des pulverisierten Ernährungsprodukts.

9. Das Verfahren gemäß Ansprüchen 1-8, worin das pulverisierte Ernährungsprodukt von 25% bis 30% Fett, von 8% bis 12% Protein, von 45% bis 60% Kohlenhydrate, und von 2% bis 5% Wasser umfasst, alle bezogen auf das Gewicht des pulverisierten Ernährungsprodukts.

10. Das Verfahren gemäß Ansprüchen 1-9, worin das pulverisierte Ernährungsprodukt von 26% bis 28% Fett, von 10% bis 12% Protein, von 50% bis 55% Kohlenhydrate, und von 2% bis 5% Wasser umfasst, alle bezogen auf das Gewicht des pulverisierten Ernährungsprodukts.

11. Das Verfahren gemäß Ansprüchen 1-7, worin das pulverisierte Ernährungsprodukt von 0,5% bis 20% Fett, von 10% bis 90% Protein, von 5% bis 40% Kohlenhydrate, und von 2% bis 5% Wasser umfasst, alle bezogen auf das Gewicht des pulverisierten Ernährungsprodukts.

12. Das Verfahren gemäß Ansprüchen 1-7 und 11, worin das pulverisierte Ernährungsprodukt von 1% bis 10% Fett, von 30% bis 80% Protein, von 7% bis 30% Kohlenhydrate, und von 2% bis 5% Wasser umfasst, alle bezogen auf das Gewicht des pulverisierten Ernährungsprodukts.

13. Das Verfahren gemäß Ansprüchen 1-7 und 11-12, worin das pulverisierte Ernährungsprodukt von 2% bis 5% Fett, von 40% bis 75% Protein, von 10% bis 25% Kohlenhydrate, und von 2% bis 5% Wasser umfasst, alle bezogen auf das Gewicht des pulverisierten Ernährungsprödükts.

14. Das Verfahren gemäß Ansprüchen 1-13, worin die trockene Mischung zusätzlich Mineralien einschließt.

15. Das Verfahren gemäß Anspruch 1-5, worin das pulverisierte Ernährungsprodukt Vitamine und Mineralien einschließt.

## Revendications

1. Procédé de fabrication d'un produit nutritif en poudre extrudé, le procédé comprenant :
la mise à disposition d'un mélange sec comprenant une protéine et un glucide, et d'un liquide comprenant de l'eau et un lipide ;
la mise en contact du mélange sec et du liquide afin de produire une pâte ;
l'introduction de la pâte dans une extrudeuse assistée par ultrasons afin d'émulsifier le lipide avec la protéine hydratée ;
l'extrusion de la pâte afin de produire des granulés ; et
le séchage et le broyage des granulés afin de produire un produit nutritif en poudre,
où le produit nutritif en poudre comprend un taux de lipide libre inférieur à 5 % en poids du produit nutritif en poudre.

2. Procédé selon la revendication 1, comprenant en outre l'introduction d'un mélange sec comprenant une protéine et un glucide dans un préconditionneur et l'introduction d'un liquide comprenant de l'eau et un lipide dans le préconditionneur.

3. Procédé selon les revendications 1-2, dans lequel l'extrudeuse assistée par ultrasons est soumise à une énergie ultrasonique ayant une fréquence inférieure à 30 kilohertz.

4. Procédé selon les revendications 1-3, dans lequel un ou plusieurs composants supplémentaires sont mélangés dans les granulés extrudés avant le séchage et le broyage, où les un ou plusieurs composants sont sélectionnés parmi des probiotiques, des prébiotiques, des vitamines, et des combinaisons de ceux-ci.

5. Procédé selon les revendications 1-4, dans lequel le produit nutritif en poudre possède une granulométrie de 4 ou moins sur une échelle granulométrique de 1 à 6.

6. Procédé selon les revendications 1-5, dans lequel le taux de lipide libre dans le produit nutritif en poudre est compris entre 1 % et 5 % en poids du produit nutritif en poudre.

7. Procédé selon les revendications 1-6, dans lequel le taux de lipide libre dans le produit nutritif en poudre est compris entre 1 % et 3 % en poids du produit nutritif en poudre.

8. Procédé selon les revendications 1-7, dans lequel le produit nutritif en poudre comprend de 10 % à 35 % de lipide, de 5 % à 35 % de protéine, de 30 % à 85 % de glucides, et de 2 % à 5 % d'eau, tous étant en poids du produit nutritif en poudre.

9. Procédé selon les revendications 1-8, dans lequel le produit nutritif en poudre comprend de 25 % à 30 % de lipide, de 8 % à 12 % de protéine, de 45 % à 60 % de glucides, et de 2 % à 5 % d'eau, tous étant en poids du produit nutritif en poudre.

10. Procédé selon les revendications 1-9, dans lequel le produit nutritif en poudre comprend de 26 % à 28 % de lipide, de 10 % à 12 % de protéine, de 50 % à 55 % de glucides, et de 2 % à 5 % d'eau, tous étant en poids du produit nutritif en poudre.

11. Procédé selon les revendications 1-7, dans lequel le produit nutritif en poudre comprend de 0,5 % à 20 % de lipide, de 10 % à 90 % de protéine, de 5 % à 40 % de glucides, et de 2 % à 5 % d'eau, tous étant en poids du produit nutritif en poudre.

12. Procédé selon les revendications 1-7 et 11, dans lequel le produit nutritif en poudre comprend de 1 % à 10 % de lipide, de 30 % à 80 % de protéine, de 7 % à 30 % de glucides, et de 2 % à 5 % d'eau, tous étant en poids du produit nutritif en poudre.

13. Procédé selon les revendications 1-7 et 11-12, dans lequel le produit nutritif en poudre comprend de 2 % à 5 % de lipide, de 40 % à 75 % de protéine, de 10 % à 25 % de glucides, et de 2 % à 5 % d'eau, tous étant en poids du produit nutritif en poudre.

14. Procédé selon les revendications 1-13, dans lequel le mélange sec comprend en outre des minéraux.

15. Procédé selon les revendications 1-5, dans lequel le produit nutritif en poudre comprend des vitamines et des minéraux.
